# DEMANDE DE BREVET EUROPEEN

(11) **EP 1 810 574 A1**
(43) Date de publication de la demande: **25.07.2007**
(21) Numéro de dépôt: 07100629.0
(22) Date de dépôt: 16.01.2007
(51) Int. Cl.: A23B 5/00, A23B 5/06, A23B 5/18, A23B 5/20, A23B 5/22, A23B 5/12

(54) **Procédé de conservation d'oeufs, compositions et installations pour la mise en oeuvre d'un tel procédé**

(30) Priorité: 19.01.2006 FR 0600501
(71) Demandeur: Etablissements LE CAM, 56500 Naizin (FR)
(72) Inventeur: Mompon, Bernard, 56000 Vannes (FR); Gourdon-Surbled, Isabelle, 56250 Saint-Nolff (FR); Le Brun, Gaël, 56390 Grandchamp (FR); Fegar, Josianne, 53100 Saint-Baudelle (FR); Sarrazin, Laurent, 53440 La Bazoges-Montpintçon (FR)
(74) Mandataire: Larcher, Dominique

(57) **Abrégé**

L'invention concerne un procédé de conservation des oeufs caractérisé en ce qu'il comprend au moins une étape consistant à déposer de manière essentiellement homogène une composition contenant au moins une zéolithe et des ions métalliques sur au moins l'essentiel de la coquille desdits oeufs.

## Description

L'invention concerne le domaine de la conception et de la mise en oeuvre des procédés de conservation des produits alimentaires.

Plus précisément, l'invention concerne un procédé de conservation des oeufs destinés à la consommation humaine (généralement désignés par l'homme de l'art par les termes « oeufs de table » ou « oeufs coquille) des compositions et des installations destinées à la mise en oeuvre d'un tel procédé, permettant d'améliorer à la fois la durée et la qualité de conservation de ceux-ci.

Le procédé et la composition selon la présente invention permettent d'abattre très fortement la flore microbienne totale susceptible d'être présente à la surface des coquilles d'oeufs et notamment d'éradiquer totalement de cette surface certains micro-organismes potentiellement pathogènes pour l'homme, tels que les salmonelles. Le procédé et la composition selon l'invention garantissent ainsi au consommateur une qualité microbiologique accrue des oeufs.

Les oeufs et les produits à base d'oeufs sont en effet les aliments les plus fréquemment mis en cause dans la survenue des toxi-infections alimentaires collectives (TIAC) à Salmonelles. Selon le rapport de l'INVS pour les années 1999 et 2000, les oeufs et produits d'oeufs ont été mis en cause dans 64 % des foyers pour lesquels l'agent a été identifié et le sérotype *enteritidis* était prédominant (59 % des foyers dus à Salmonella).

Ces infections alimentaires résultent essentiellement du non respect des températures de conservation des aliments, de l'existence de facteurs environnementaux de contamination des denrées, de la contamination des matières premières et des erreurs dans le processus de préparation des aliments.

La prévention des infections à salmonelles en particulier et des infections d'origine alimentaire en général, passe par l'amélioration constante des mesures d'hygiène dans le domaine de l'agroalimentaire, de la restauration (mesures HACCP : Hazard Analysis Control Critical Point) et par le respect individuel de mesures simples préconisées telles que : respect de la chaîne du froid et des dates limites de consommation, nettoyage régulier des réfrigérateurs, emballage individuel des aliments stockés, nécessité d'une cuisson suffisamment longue de la viande et des oeufs.

Outre ces mesures préventives, en Europe, depuis l'application de la Directive 92/117/CEE du conseil européen (abrogée par la Directive 2003/99/CE du Parlement et du Conseil), l'abattage des poules et le traitement thermique des oeufs sont imposés en cas de recherche positive de Salmonelles dans les élevages de poules pondeuses. Il est de plus nécessaire et obligatoire de procéder à un nettoyage-désinfection de l'élevage suivi d'un vide sanitaire.

Le coût de ces mesures préventives ou curatives pour la collectivité est important.

Malgré la baisse significative du nombre de cas de salmonelloses observée depuis la mise en place de telles mesures, le niveau du nombre de cas observé reste toutefois élevé, avec notamment, en ce qui concerne la France, une épidémie à Salmonella *typhimurium* importante en 2002 et une légère augmentation du nombre de cas à Salmonella *enteritidis* pour les étés 2002 et 2003.

Ces aspects sanitaires et économiques font de la salmonellose un problème de santé publique qui justifie la place importante de cette infection en terme de surveillance, de mise en oeuvre de mesures de prévention et de contrôle tout au long de la chaîne alimentaire. Les volailles sont particulièrement concernées et la prévention de la contamination par Salmonella des oeufs et de la viande de volaille est un objectif prioritaire des pouvoirs publics.

Selon les dispositions de l'Union Européenne, les oeufs destinés respectivement au consommateur final (GMS - grandes et moyennes surfaces) ou à des entreprises de l'industrie alimentaire agréées (RHD - restauration hors domicile) doivent être livrés au consommateur final dans un délai maximal de 21 jours. Ces oeufs, classés en catégorie A ne doivent être ni lavés, ni nettoyés de quelque manière que ce soit avant ou après classement (Règlement 2295/2003- Lamy Dehove novembre 2004 - § 380-81). De plus ils ne doivent subir aucun traitement de conservation thermique ou pouvant être dénaturants pour la cuticule, ni être réfrigérés dans des locaux ou installations dans lesquels la température est maintenue artificiellement en dessous de 5 °C. (La dérogation relative à l'emploi de la réfrigération pendant le transport est limitée à 24 H, pour autant que la quantité d'oeufs entreposés ou transportés ne dépasse pas celle nécessaire pour 3 jours de vente au détail).

Pour garantir la qualité des oeufs coquilles commercialisés, ils doivent en toutes circonstances être maintenus à l'abri de l'humidité. Ils ne doivent à aucun moment être mis au contact de produits susceptibles de leur communiquer un goût ou une odeur anormale ou de les souiller. Ils doivent être protégés des chocs, des intempéries, de la lumière, de la chaleur et du froid excessif.

Malgré toutes les précautions prises pour assurer la meilleure sécurité alimentaire aux oeufs coquille de catégorie A, une pollution accidentelle d'origine microbiologique est parfois constatée. La contamination de la coquille, selon les germes en présence, peut être tout à fait anodine pour la santé du consommateur final mais représente parfois un risque pathogène lors du cassage et de la mise en contact de l'extérieur de la coquille avec le contenu.

Certains pays procèdent à la débactérisation de la coquille par trempage, brossage, séchage puis enduction d'une couche étanche de cire pour assurer une garantie sanitaire maximale. Même si ces traitements sont encore tolérés dans l'Union Européenne jusqu'au 31 décembre 2006 pour ceux qui les pratiquaient déjà avant le 1^{er} juin 2003, ces traitements seront, à terme, totalement interdits dans les pays de l'Union Européenne. (Règlement 2052/2006 - Lamy Dehove novembre 2004 - § 380-81)

Tout traitement visant à améliorer les qualités bactériologiques des oeufs coquilles doit respecter l'intégrité physico-chimique de la cuticule (couche organique se trouvant sur le surface extérieure de la coquille).

La maîtrise de la qualité microbiologique des oeufs de consommation commence le plus en amont possible de la filière de production. Les élevages fournissant les oeufs à couver respectent les dispositions réglementaires de barrières sanitaires et de contrôles en vue de détecter toute présence de Salmonella enteritidis et typhimurium. Les poussins, futurs poulettes puis pondeuses, doivent être indemnes de toute contamination avant d'entrer en élevage.

Les dispositions concernant les élevages de pondeuses pour la production d'oeufs de consommation revêtent un caractère obligatoire pour les contrôles de recherche de Salmonella enteritidis, mais les mesures sanitaires définies dans la charte sanitaire française (Arrêté du 26 octobre 1998) demeurent facultatives pour les aviculteurs. Toutefois elles constituent un maillon très important pour la maîtrise de la qualité des oeufs de consommation. C'est pourquoi, le procédé décrit dans la présente invention ne peut pas être dissocié en amont de la mise en application au moins de ces moyens de maîtrise et de contrôles dans les élevages de production des oeufs. Leur renforcement en terme de nombre de contrôles de recherche de Salmonelles dans les bâtiments d'élevage et sur les oeufs produits s'avère être nécessaire avant d'aller plus loin dans la filière. Il s'agit là d'un prérequis indispensable.

D'autre part, le procédé décrit dans la présente invention doit également être précédé d'un tri des oeufs, dit mirage.

Un objectif de la présente invention est de proposer un procédé de conservation des oeufs permettant une amélioration significative de leur durée de conservation.

Un autre objectif de la présente invention est de divulguer un tel procédé qui permette un abaissement significatif de leur taux de contamination microbienne initiale et qui permette une protection durable desdits oeufs contre des risques de contamination lors des opérations de conditionnement et de stockage.

Un autre objectif de la présente invention est de proposer un tel procédé qui respecte l'intégrité de la cuticule des oeufs.

Notamment, un objectif de la présente invention est de permettre la commercialisation d'oeufs avec des garanties bactériologiques accrues et notamment une absence durable en salmonelles.

Un objectif de l'invention est aussi de décrire un tel procédé de conservation des oeufs qui soit efficace à court et moyen terme.

Également un objectif de la présente invention est de proposer de nouvelles compositions antimicrobiennes pouvant être mises en oeuvre dans le cadre du procédé en question.

Enfin, un objectif de la présente invention est aussi de proposer un type nouveau d'installation pour le traitement des oeufs.

Ces différents objectifs, ainsi que d'autres qui apparaîtront par la suite, sont atteints grâce à l'invention qui concerne un procédé de conservation des oeufs (notamment de poule, de canne, de caille), caractérisé en ce qu'il comprend au moins une étape consistant à déposer de manière essentiellement homogène une composition contenant au moins une zéolithe et des ions métalliques sur au moins l'essentiel de la coquille desdits oeufs.

Dans un contexte réglementaire très strict et pour faire face à des exigences sanitaires très élevées en respect du consommateur final, la Déposante a découvert que l'application d'ions métalliques, stabilisés à l'aide de zéolithes, à la surface des coquilles d'oeufs permettait de diminuer significativement la contamination bactériologique naturellement résidente sur la coquille ou bien inoculée avant ou après dépôt de la composition antibactérienne.

Préférentiellement, lesdits oeufs auront été préalablement mirés.

Préférentiellement, ladite composition contenant des ions métalliques est pulvérisée sur la coquille desdits oeufs.

Les ions métalliques utilisés dans le cadre de la présente invention pourront être de différentes natures. Toutefois, avantageusement ladite composition comprend des ions Cu²⁺ et/ou des ions Ag ⁺ et/ou des ions Zn²⁺. Ces ions ont en effet une bonne activité anti-bactérienne tout en ne présentant aucune nocivité pour le consommateur aux doses auxquelles ils seront employés.

On pourra également envisager d'utiliser différents types de zéolithes pour la mise en oeuvre du procédé selon l'invention. Toutefois, préférentiellement, ladite zéolithe est choisie dans le groupe constitué par les silicates microporeuses cristallisées de la famille des texosilicates.

Préférentiellement, ladite composition comprend au moins un composé adhésif, avantageusement naturel, permettant de faire adhérer ladite zéolithe sur les coquilles d'oeufs.

D'une façon préférée entre toutes, ledit composé adhésif naturel est choisi dans le groupe d'ingrédients ou additifs, constitué notamment par les cires, paraffines, épaississants et gélifiants autorisés en alimentation.

Selon une variante de l'invention, ladite composition comprend aussi au moins un additif permettant d'augmenter l'homogénéité de son dépôt sur lesdites coquilles d'oeufs.

Egalement selon une variante, ladite composition comprend au moins une composition colorante permettant de lui assurer une identité visuelle remarquable.

Selon un aspect particulièrement intéressant de l'invention, le procédé selon la présente invention comprend une étape supplémentaire consistant à sécher la composition sur lesdites coquilles d'oeufs à une température comprise entre 20 et 60°C.

Préférentiellement, ladite température de séchage est de 50 °C environ.

On notera que le procédé selon la présente invention ne peut en aucun cas être assimilé à un lavage, dans la mesure où il respecte la cuticule de surface des oeufs. Il s'agit plutôt d'un pélicullage actif.

Avantageusement, le procédé selon la présente invention comprend une étape supplémentaire consistant à conditionner lesdits oeufs dans un emballage en matériau plastique présentant des alvéoles, ledit matériau plastique contenant des inclusions desdits ions métalliques.

On notera que l'invention concerne également un nouveau type d'installation permettant la mise en oeuvre du procédé selon l'invention.

Une telle installation comprend des moyens de convoyage des oeufs et des moyens d'application essentiellement homogène de ladite composition sur lesdits oeufs.

Préférentiellement, lesdits moyens d'application essentiellement homogène de ladite composition sur lesdits oeufs sont des moyens de pulvérisation.

Avantageusement, ladite installation comprend au moins une chambre de traitement dans laquelle sont prévues des buses de pulvérisation.

Préférentiellement, ladite installation comprend des moyens de séchage des oeufs intégré dans lesdits moyens de convoyage et permettant de sécher les oeufs avant de déposer ladite composition sur la coquille de ceux-ci.

D'une façon préférée entre toutes, lesdits moyens de séchage forment un tunnel de séchage.

L'invention, ainsi que les différents avantages qu'elle présente seront plus facilement compris grâce à la description qui va suivre d'exemples de mise en oeuvre de celle-ci.

Dans le cadre de ces exemples, plusieurs compositions contenant des ions métalliques fixées sur zéolithes ont été préparées pour la réalisation d'une première série de tests sur des boites de Pétri à l'aide de tampons imprégnés.

Cette série de tests a permis de montrer l'intérêt de ces produits pour lutter contre les Salmonelles et de procéder à une première sélection de zéolithes d'ions métalliques mis en oeuvre, par la suite, dans des conditions réelles sur coquilles d'oeufs.

De nombreux tests microbiologiques ont été réalisés pour simuler différents cas de figure, notamment :
■ contamination initiale des coquilles par des souches sélectionnées avant traitement par des ions métalliques
■ contamination initiale des coquilles par des souches sélectionnées avant traitement par des ions métalliques avec un support fixateur
■ contamination des coquilles après traitement par les ions métalliques
   Des mesures de la flore totale et des Salmonelles ont été réalisées à intervalles réguliers pendant une période s'étalant parfois jusqu'à 35 jours, soit une semaine au delà de la DLUO (Date Limite d'Utilisation Optimale) ou DCR (Date de Consommation Recommandée).
   Les oeufs témoins étaient naturellement contaminés par une flore non pathogène et les autres oeufs ont été inoculés avec des Salmonelles de type *enteritidis.*
   Les compositions actives, qui on été mises au point après de nombreux essais de mélange et de dépôt, se présentent sous forme de poudres.
   Conformément à la présente invention, les compositions ont été pulvérisées à la surface des oeufs sous forme d'un fin brouillard puis les oeufs sont traités dans un tunnel à air chauffé à 50 °C pour accélérer le séchage de la composition
   Dans ce cadre, l'installation pour la mise en oeuvre du procédé comprend des moyens de convoyage spécifiques permettant de traiter la totalité de la surface des coquilles. La brumisation de la composition est réalisée dans une chambre de traitement close à l'aide de buses de vaporisation dont la finesse du spray est réglable.
   Les oeufs sont ensuite séchés dans un tunnel à air et conditionnés ensuite dans des alvéoles en matière plastique sécurisées pour offrir les garanties sanitaires maximales.
   Toutes les zéolithes utilisées dans les exemples sont issues de synthèse chimique.
   Les zéolithes sont des silicates microporeuses cristallisées de la famille des texosilicates dont la taille des canaux et cavités varie selon la structure entre 3 et 13 Å. Ils se présentent sous forme de poudre et la taille des cristaux est en moyenne de quelques microns. Ces produits possèdent une grande surface spécifique qui est de 900 m²/g pour la zéolithe Y.
   Leur structure tétraédrique avec enchaînements de SiO₄ et AlO₄ et mise en commun des oxygènes entraîne l'apparition d'une charge négative sur chaque aluminium (AlO₂). Cette charge négative est compensée par la charge positive d'un cation pour stabiliser la structure. Les zéolithes sont, par conséquent, des échangeurs cationiques où l'on peut remplacer le cation Mⁿ⁺ (le plus souvent Na⁺) par d'autres cations C^{m+}. Les zéolithes de base utilisées sont sous forme sodique et leurs formules générales s'écrivent NaAlO₂ x SiO₂ (x étant le rapport atomique et le rapport Si/Al étant toujours supérieur ou égal à 1). Une zéolithe échangée par un cation C^{m+} a pour formule : (1/m) yC⁺ (1-y)Mⁿ⁺AlO₂ xSiO₂ (exemple : Mⁿ⁺ = Na⁺ et C^{m+} = Ag⁺).
   La structure poreuse de la zéolithe contient de l'eau (compensation capillaire). On peut éliminer cette eau par traitement thermique (activation) et le phénomène est réversible.
   Trois types de zéolithes ont été utilisées, pures à plus de 99%.
■ Zéolithe A (ZA) : Na AlO₂ SiO₂ présentant des pores de 4.2 Å.
■ Zéolithe X (ZX): Na AlO₂ 1.25 SiO₂ présentant des pores de 8 Å.
■ Zéolithe Y (ZY): Na AlO₂ 2.6 SiO₂ présentant des pores de 9 Å.

Pour réaliser les échanges, on opère le plus souvent en bouillie. La zéolithe est mise en suspension sous agitation avec une solution aqueuse de sels métalliques, exemple (AgNO₃ pour un échange avec l'argent).

Les réactions d'échange sont gérées par la loi d'action de masse. Cette réaction peut être équilibrée et la constante d'équilibre Kp dépend de la température.

Les paramètres qui influent sur l'échange sont la température, la concentration en sel métallique et le rapport entre le volume de solution et le poids de zéolithe.

Le taux d'échange est calculé selon le principe décrit ci-après pour la zéolithe X substituée en Argent :

| formules | masse molaire en g/mole | teneur en Ag en % | taux d'échange en Ag en % |
|---|---|---|---|
| Na AlO₂ 1.25 SiO₂ | 157 | 0 | 0 |
| Ag AlO₂ 1.25 SiO₂ | 241.87 | 44.6 | 100 |
| Ag0.5 Na0.5 AlO₂ 1.25 SiO₂ | 199.43 | 27.04 | 50 |
| Ag0.25 Na0.75 AlO₂ 1.25 SiO₂ | 178.22 | 15.1 | 25 |
| Ag0.125 Na0.875 AlO₂ 1.25 SiO₂ | 176.6 | 7.6 | 12.5 |

Tous les test réalisés et décrits dans les exemples ont porté sur des lots de 30 oeufs.

Deux mesures sont réalisées : l'analyse de la flore totale et la recherche de salmonelles par la méthode TECRA (Recherche des salmonelles dans 25g méthode TECRA UTIMA SALMONELLA (dite "en 48h") - n° attestation TEC-24/2-04/3-Date de validation : 02/04/2003 - document joint en annexe) en 48 H dans 25 g après avoir mélangé 9 oeufs avec leurs coquilles dans un flacon stérile.

Les analyses sont répétées trois fois pour les oeufs traités et six fois pour les témoins.

Les témoins négatifs sont conservés dans les mêmes conditions que les autres mais non traités.

Les témoins positifs sont obtenus après inoculation de Salmonella enteritidis à JO (temps initial).

Le traitement par les zéolithes a consisté soit en une répartition manuelle à sec (poudre dispersée sur la surface de la coquille), soit en une pulvérisation dans une suspension aqueuse en présence ou non d'un agent texturant. Ce traitement a été réalisé parfois avant ou après inoculation.

### Exemple n° 1

Le niveau de contamination appliqué a été choisi peu élevé sur cet exemple (de l'ordre de 10²/g) car il est représentatif de cas de contaminations accidentelles qui pourraient survenir. En effet, la maîtrise des conditions sanitaires des élevages rend les contaminations en salmonelles rares et faibles.

Les résultats étant mesurés en présence ou absence de salmonelles dans 25 g d'échantillon prélevé, ils sont tous exprimés en taux de présence pour les rendre plus lisibles. Le pourcentage obtenu est le rapport entre le nombre d'essais qui ont eu pour résultat présence rapporté au nombre d'essais total.

| références | Désignation du produit antimicrobien (AM) | Résultat à JO | Résultat à J+21 | Résultat à J+35 |
|---|---|---|---|---|
| oeufs témoins sans salmonelles | - | Présence 0 % | Présence 0 % | Présence 0 % |
| oeufs témoins inoculés avec salmonelles | - | Présence 100 % | Présence 100 % | Présence 100 % |
| oeufs inoculés puis traités par l'agent AM | ZA à 9.7 % Zn | Présence 100 % | Présence 66 % | Présence 33 % |
| | ZY à 13.6% Ag | Présence 100 % | Présence 100 % | Présence 33 % |
| | ZX à 13.6% Ag | Présence 100 % | Présence 66 % | Présence 33 % |
| oeufs traités par l'agent AM puis inoculés | ZX à 13.6% Ag | Présence 100 % | Présence 33 % | Présence 33 % |
| | ZY à 13.6% Ag | Présence 100% | Présence 0% | Présence 0% |

La flore totale mesurée sur les témoins négatifs est de l'ordre de 10²/g à J0, J+21 et J+35. Dans certains cas d'oeufs traités, même si l'absence en Salmonelles n'est statistiquement que de 66 %, la flore totale dénombrée dans ces cas n'était que de 10⁰ ou 10¹, soit une réduction d'un log. Le traitement a permis de diminuer la flore totale.

Dans ce cas de figure, où la contamination en salmonelles est très faible, le traitement avec les zéolithes A à 9.7 % Zn et X à 13.6 % Ag s'est avéré efficace dès 21 jours. Au bout de 35 jours, toutes les zéolithes utilisées se sont montrées efficaces. Les agents antimicrobiens testés semblent encore plus performants quand ils sont appliqués avant la contamination en salmonelles.

### Exemple n° 2

Le niveau de contamination appliqué a été choisi peu élevé sur cet exemple : de l'ordre de 10²/g.

Les résultats étant mesurés en présence ou absence de salmonelles dans 25 g d'échantillon prélevé, ils sont exprimés en pourcentage de présence pour les rendre plus lisibles. Le pourcentage obtenu est le rapport entre le nombre d'essais qui ont eu pour résultat présence rapporté au nombre d'essais total.

| références | Désignation du produit antimicrobien (AM) | Résultat à J1 | Résultat à J +22 |
|---|---|---|---|
| oeufs témoins sans salmonelles | - | Présence 0 % | Présence 0 % |
| oeufs témoins inoculés avec salmonelles | - | Présence 66 % | Présence 0 % |
| oeufs inoculés puis traités par l'agent AM | ZY à 13.6 % Ag | Présence 0% | Présence 0 % |
| | ZX à 13.6% Ag | Présence 33% | Présence 0 % |

Dès le court terme (J+1), les résultats sont meilleurs pour les oeufs traités. Cela montre l'efficacité cinétique du traitement sur l'éradication des salmonelles.

Sans traitement, lors de ces essais, les salmonelles ont disparu au bout de 22 jours dans tous les cas.

### Exemple 3

Le niveau de contamination appliqué a été choisi très élevé sur cet exemple (de l'ordre de 10⁴ à 10⁵/g) pour tester l'efficacité des agents antimicrobiens dans des conditions extrêmes.

Les résultats étant mesurés en présence ou absence de salmonelles dans 25 g d'échantillon prélevé, nous les avons tous exprimés en présence pour les rendre plus lisibles. Le pourcentage obtenu est le rapport entre le nombre d'essais qui ont eu pour résultat présence rapporté au nombre d'essais total.

| références | Désignation du produit antimicrobien (AM) | Résultat à J+1 | Résultat à J+6 | Résultat A J+21 | Résultat à J+35 |
|---|---|---|---|---|---|
| oeufs témoins sans salmonelles | - | Présence 0% | Présence 0% | Présence 0% | Présence 0% |
| oeufs témoins inoculés avec salmonelles | - | Présence 100 % | Présence 100 % | Présence 83 % | Présence 0 % |
| oeufs inoculés puis traités par l'agent AM | ZY à 13.6 % Ag | Présence 100 % | Présence 100 % | Présence 0 % | Présence 0 % |
| | ZX à 13.6 % Ag | Présence 100% | Présence 33 % | Présence 33 % | Présence 33 % |
| | ZA à 8 % Zn + 0.2 % Ag | Présence 100 % | Présence 100 % | Présence 33 % | Présence 66 % |

Dans ce cas de figure, où la contamination en salmonelles est très élevée, le traitement avec les zéolithes Y à 13.6 % Ag s'est avéré efficace dès 21 jours et persistant au bout de 35 jours. L'éradication est totale dans ce cas de figure malgré une inoculation très forte.

L'effet de la zéolithe X à 13.6 % d'Ag semble beaucoup plus important sur le court terme car il diminue la contamination dès J+6 de manière significative.

Concernant la flore totale, tous les oeufs traités montrent une diminution de 2 log dès J+1 qui se maintient ensuite ou baisse alors que pour les témoins positifs non traités, la flore totale ne diminue significativement qu'à J+6 d'un log et à J+21 de deux log.

Etant donné que la flore totale est dans ces expériences majoritairement constituée de Salmonelles (flore totale initiale de l'ordre de 10²/g + inoculation de Salmonelles de l'ordre de 10⁴ à 10⁵/g) et puisque tous les agents antimicrobiens testés montrent une efficacité rapide sur la flore totale, nous pouvons en conclure que ces agents sont efficaces sur l'élimination des Salmonelles.

Le présent procédé de conservation par adjonction de zéolithes d'ions métalliques pourra être utilisé seul ou en combinaison avec les autres procédés de conservation des oeufs déjà utilisés dans et hors Union Européenne ou pour des oeufs de toutes catégories, à condition que ceux-ci soient issus d'une filière de production maîtrisant tous ses maillons du point de vue sanitaire, et qu'ils soient préférentiellement mirés.

## Revendications

1. Procédé de conservation des oeufs **caractérisé en ce qu'**il comprend au moins une étape consistant à déposer de manière essentiellement homogène une composition contenant au moins une zéolithe et des ions métalliques sur au moins l'essentiel de la coquille desdits oeufs.

2. Procédé selon la revendication 1 **caractérisé en ce que** lesdits oeufs ont été préalablement mirés.

3. Procédé selon la revendication 1 ou 2 **caractérisé en ce que** ladite composition contenant des ions métalliques est pulvérisée sur la coquille desdits oeufs.

4. Procédé selon l'une des revendications 1 à 3 **caractérisé en ce que** ladite composition comprend des ions Cu²⁺ et/ou Zn²⁺ et/ou Ag⁺, seuls ou en combinaison.

5. Procédé selon l'une quelconque des revendications précédentes **caractérisé en ce que** ladite zéolithe est choisie dans le groupe constitué par les silicates microporeuses cristallisées de la famille des texosilicates.

6. Procédé selon l'une quelconque des revendications précédentes **caractérisé en ce que** ladite composition comprend au moins un composé adhésif permettant de faire adhérer ladite zéolithe sur les coquilles d'oeufs.

7. Procédé selon la revendication 6 **caractérisé en ce que** ledit composé adhésif est un composé naturel.

8. Procédé selon la revendication 7 **caractérisé en ce que** ledit composé adhésif naturel est choisi dans les groupes constitués par les cires, les paraffines, les épaississants et gélifiants.

9. Procédé selon l'une quelconque des revendications précédentes **caractérisé en ce que** ladite composition comprend au moins un additif permettant d'augmenter l'homogénéité de son dépôt sur lesdites coquilles d'oeufs.

10. Procédé selon l'une quelconque des revendications précédentes **caractérisé en ce que** ladite composition comprend au moins un colorant permettant de lui assurer une identité visuelle remarquable.

11. Procédé selon l'une quelconque des revendications précédentes **caractérisé en ce qu'**il comprend une étape supplémentaire consistant à sécher la composition sur lesdites coquilles d'oeufs à un température comprise entre 20 et 60 °C.

12. Procédé selon la revendication 11 **caractérisé en ce que** ladite température de séchage est de 50 °C environ.

13. Procédé selon l'une quelconque des revendications précédentes **caractérisé en ce qu'**il comprend une étape supplémentaire consistant à conditionner lesdits oeufs dans un emballage en matériau plastique présentant des alvéoles, ledit matériau plastique contenant des inclusions desdits ions métalliques.

14. Composition pour la mise en oeuvre du procédé selon l'une des revendications 6 à 13 **caractérisée en ce qu'**elle comprend au moins une zéolithe, des ions métalliques et au moins un composé adhésif permettant de faire adhérer ladite zéolithe sur les coquilles d'oeufs.

15. Composition selon la revendication 14 **caractérisée en ce que** ledit adhésif est un composé naturel.

16. Composition selon la revendication 15 **caractérisé en ce que** ledit composé adhésif naturel est choisi dans le groupe constitué par les silicates microporeuses cristallisées de la famille des texosilicates.

17. Composition selon l'une quelconque des revendications 14 à 16 **caractérisée en ce qu'**elle comprend au moins un excipient permettant d'augmenter l'homogénéité de son dépôt sur lesdites coquilles d'oeufs.

18. Composition selon l'une quelconque des revendications 14 à 17 **caractérisée en ce qu'**elle comprend au moins un colorant permettant de lui assurer une identité visuelle remarquable.

19. Composition selon l'une quelconque des revendications 14 à 18 **caractérisée en ce qu'**elle se présente sous la forme d'une poudre.

20. Installation pour la mise en oeuvre du procédé selon l'une quelconque des revendications 1 à 13 **caractérisé en ce qu'**elle comprend des moyens de convoyage des oeufs et des moyens d'application essentiellement homogène de ladite composition sur lesdits oeufs.

21. Installation selon la revendication 20 **caractérisée en ce que** lesdits moyens d'application essentiellement homogène de ladite composition sur lesdits oeufs sont des moyens de pulvérisation.

22. Installation selon la revendication 21 **caractérisée en ce qu'**elle comprend au moins une chambre de traitement dans laquelle sont prévues des buses de pulvérisation.

23. Installation selon l'une quelconque des revendications 20 à 22 **caractérisé en ce qu'**elle comprend des moyens de séchage des oeufs intégré dans lesdits moyens de convoyage et permettant de sécher les oeufs avant de déposer ladite composition sur la coquille de ceux-ci.

24. Installation selon la revendication 23 **caractérisée en ce que** lesdits moyens de séchage forment un tunnel de séchage.
